# EUROPEAN PATENT APPLICATION

(11) **EP 4 398 382 A1**
(43) Date of publication of application: **10.07.2024**
(21) Application number: 22881304.4
(22) Date of filing: 11.10.2022
(51) Int. Cl.: H01M 10/54, C01D 15/02, C01D 15/04, C01D 15/08, C22B 26/12, C22B 7/00, H01M 4/13, H01M 10/052

(54) **METHOD FOR RECOVERING LITHIUM PRECURSOR FROM LITHIUM SECONDARY BATTERY**

(30) Priority: 13.10.2021 KR 20210135782
(71) Applicant: SK Innovation Co., Ltd., Seoul 03188 (KR)
(72) Inventor: KIM, Hyeon Jung, Daejeon 34124 (KR); PARK, Ji Yun, Daejeon 34124 (KR); KIM, Ji Min, Daejeon 34124 (KR); PARK, Dong Ryul, Daejeon 34124 (KR); CHOI, Min Hyuck, Daejeon 34124 (KR); HONG, Suk Joon, Daejeon 34124 (KR)
(74) Representative: Frick, Robert
(86) International application number: PCT/KR2022/015266
(87) International publication number: WO 2023/063677

(57) **Abstract**

The method for recovering lithium hydroxide from a lithium secondary battery allows a powder comprising lithium and valuable metals to be prepared from the lithium secondary battery. The powder is reduced so as to form a preliminary precursor mixture comprising a preliminary lithium precursor and valuable metal-containing particles. The preliminary precursor mixture is primarily washed with water (H₂O) so as to generate a lithium precursor aqueous solution and a precipitate. The lithium precursor is recovered through solid-liquid separation of the lithium precursor aqueous solution and the precipitate. The lithium precursor is recovered, through additional washing and solid-liquid separation, from the precipitate obtained through the solid-liquid separation. A calcium compound is added in the primary washing step or the additional washing step. Therefore, a highly-pure lithium precursor can be obtained without a complex leaching process and additional processes resulting from a wet process of an acid solution.

## Description

### [TECHNICAL FIELD]

The present invention relates to a method for recovering a lithium precursor from a lithium secondary battery. More particularly, the present invention relates to a method for recovering a high-purity lithium precursor from a waste lithium secondary battery.

### [BACKGROUND ART]

A secondary battery which can be charged and discharged repeatedly has been widely employed as a power source of a mobile electronic device such as a camcorder, a mobile phone, a laptop computer, etc., according to developments of information and display technologies. Examples of the secondary battery includes, e.g., a lithium secondary battery, a nickel-cadmium battery, a nickel-hydrogen battery, etc. The lithium secondary battery is actively developed and applied due to high operational voltage and energy density per unit weight, a high charging rate, a compact dimension, etc.

The lithium secondary battery may include an electrode assembly including a cathode, an anode and a separation layer (separator), and an electrolyte immersing the electrode assembly. The lithium secondary battery may further include an outer case having, e.g., a pouch shape for accommodating the electrode assembly and the electrolyte.

A lithium composite oxide may be used as a cathode active material for the lithium secondary battery. The lithium composite oxide may further contain a transition metal such as nickel, cobalt, manganese, etc.

As the above-mentioned high-cost valuable metals are used for the cathode active material, 20% or more of a production cost is required for manufacturing the cathode material. Additionally, as environment protection issues have recently been highlighted, a recycling method of the cathode active material is being researched.

Conventionally, a method of sequentially recovering valuable metals by leaching a waste cathode active material into a strong acid such as sulfuric acid has been used, but a wet process is disadvantageous from an aspect of a regeneration selectivity, a regeneration time, etc., and may cause environmental pollution.

For example, Japanese Patent Publication No. 2019-178395 discloses a method of recovering a lithium precursor using a wet method. However, in this case, reduction of purity by impurities generated from materials and components other than the lithium precursor may be caused. Thus, researches of a method for recovering a lithium precursor of high purity using a dry-based reaction are needed.

### DETAILED DECRIPTIONS OF THE INVENTION

### [Technical Objective]

According to an aspect of the present invention, there is provided a method for recovering a lithium precursor from a used lithium secondary battery with high purity.

### [Technical Means]

In a method for recovering a lithium precursor according to example embodiments, a powder including lithium and valuable metals is prepared from a lithium secondary battery. The powder is reduction-treated to form a preliminary precursor mixture including a preliminary lithium precursor and valuable metal-containing particles. A primary washing of the preliminary precursor mixture with water (H₂O) is performed to generate a lithium precursor aqueous solution and a precipitate. A lithium precursor is recovered by a solid-liquid separation of the lithium precursor aqueous solution from the precipitate. An additional washing and solid-liquid separation of the precipitate obtained from the solid-liquid separation to recover a lithium precursor. A calcium compound is added in the primary washing or the additional washing.

In some embodiments, the reduction-treating may be performed through a fluidized bed reactor utilizing a hydrogen gas.

In some embodiments, the preliminary lithium precursor may include lithium hydroxide, lithium fluoride and lithium carbonate.

In some embodiments, lithium fluoride and lithium carbonate contained in the preliminary lithium precursor may be dissolved in water and converted into lithium hydroxide in the primary washing.

In some embodiments, the precipitate may include at least one of an unrecovered lithium compound, a valuable metal compound and the calcium compound.

In some embodiments, the primary washing may be performed through a fluidization hydration device.

In some embodiments, the primary washing may be performed at a temperature of 20 to 70° C for 4 to 6 hours.

In some embodiments, the additional washing may be performed at a temperature of 20 to 70 °C for 0.5 to 2 hours.

In some embodiments, the powder may include a component derived from at least one of a cathode active material, an anode active material, a cathode current collector, an anode current collector, an electrolyte solution, a conductive material and a binder.

In some embodiments, the primary washing or the additional washing may include at least partially removing the component derived from the anode active material, the electrolyte solution, the conductive material or the binder by a reaction with the calcium compound.

In some embodiments, the component derived from the anode active material, the electrolyte solution, the conductive material or the binder may include a fluorine component and a carbon component.

In some embodiments, the primary washing or the additional washing may include at least partially removing the valuable metal-containing particles by a reaction with the calcium compound.

In some embodiments, the valuable metals may include aluminum.

In some embodiments, the calcium compound may include calcium oxide or calcium hydroxide.

In some embodiments, the calcium compound may be added in an amount of 2 to 10 wt% based on a total weight of the powder.

In some embodiments, the primary washing or the additional washing may be performed using 200 to 400 wt% of water based on a total weight of the powder.

In some embodiments, preparing the powder may include a dry-pulverization of the lithium secondary battery.

In some embodiments, the method of recovering the lithium precursor may include heat-treating the powder prior to the reduction-treatment.

### [Effects of the Invention]

According to an embodiment of the present invention, an additional washing treatment may be performed on a precipitate, so that an added calcium compound may substantially react with impurities. Accordingly, selectivity and efficiency of a lithium precursor recovery process may be further improved.

According to an embodiment of the present invention, a step where water mainly reacts with a preliminary lithium precursor and a step where the calcium compound mainly reacts with the impurities may be divided to further improve recovery efficiency of the lithium precursor.

### [Brief Descriptions of the Drawings]

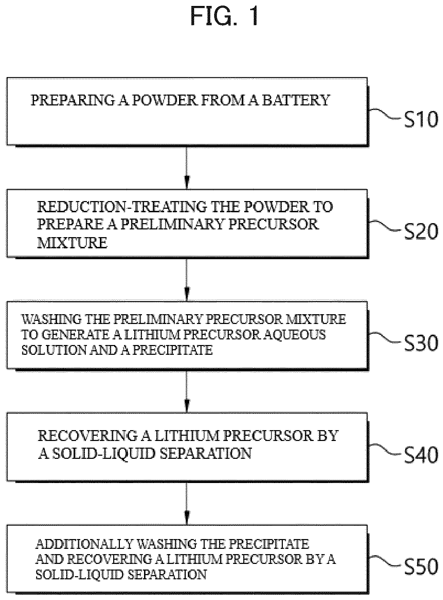

FIG. 1 is a schematic flow diagram for describing a method for recovering a lithium precursor of a lithium secondary battery in accordance with exemplary embodiments.

### [Embodiments for Practicing the Invention]

Embodiments of the present invention provide a high-purity, high-yield method for recovering a lithium precursor from a lithium secondary battery.

Hereinafter, embodiments of the present invention will be described in detail with reference to an accompanying drawing. However, these are merely exemplary, and are not intended to limit the present invention to a specific embodiment disclosed herein.

As used herein, the term "precursor" is used to comprehensively refer to a compound including a specific metal to provide the specific metal included in an electrode active material.

As used herein, the term "powder" may refer to a raw material that is introduced into a reductive reaction treatment as will be described later.

FIG. 1 is a schematic flow diagram for describing a method for recovering a lithium precursor of a lithium secondary battery in accordance with example embodiments.

Referring to FIG. 1, a powder including lithium and valuable metals may be prepared from a cathode of a lithium secondary battery (e.g., in a step of S10).

The lithium secondary battery may include an electrode assembly including a cathode, an anode and a separation layer interposed between the cathode and the anode. The cathode and the anode may include a cathode active material layer and an anode active material layer coated on a cathode current collector and an anode current collector, respectively.

For example, a cathode active material included in the cathode active material layer may include an oxide containing lithium and the valuable metals.

For example, the cathode active material may include a compound represented by Chemical Formula 1 below.

[Chemical Formula 1] LiₓM1ₐM2_{b}M3_{c}O_{y}

In Chemical Formula 1, M1, M2 and M3 may be valuable metals selected from Ni, Co, Mn, Na, Mg, Ca, Ti, V, Cr, Cu, Zn, Ge, Sr, Ag, Ba, Zr, Nb, Mo, Al, Ga or B. In Chemical Formula 1, 0<x≤1.1, 2<y<2.02, 0<a<1, 0<b<1, 0<c<1, and 0<a+b+c≤1.

In some embodiments, the cathode active material may be an NCM-based lithium oxide including nickel, cobalt and manganese.

As described above, the cathode may include a cathode current collector (e.g., aluminum (Al)) and the cathode active material layer, and the cathode active material layer may include a conductive material and a binder together with the cathode active material described above.

The conductive material may be included to promote an electron transfer between active material particles. For example, a carbon-based material such as graphite, carbon black, graphene, carbon nanotube, etc., or a metal-based material such as tin, tin oxide, titanium oxide, a perovskite material including LaSrCoO₃ or LaSrMnO₃, etc., may be included. The above exemplary conductive material may also be used in the anode.

The binder may include, e.g., a vinylidene fluoride-hexafluoropropylene copolymer (PVDF-co-HFP), polyvinylidene fluoride (PVDF), polyacrylonitrile, polymethyl methacrylate, styrene butadiene rubber (SBR), polyvinyl alcohol, polyacrylic acid (PAA), carboxymethylcellulose (CMC), hydroxypropyl cellulose, diacetyl cellulose, etc. The above-described exemplary binder may also be used in the anode in addition to the cathode.

In example embodiments, the anode active material may a material capable of intercalating and de-intercalating lithium ions known in the related art without a particular limitation. For example, a carbon-based material such as crystalline carbon, amorphous carbon, a carbon composite a carbon fiber, etc.; a lithium alloy; a silicon (Si)-based compounds or tin may be used.

As described above, the anode may include an anode current collector (e.g., copper (Cu)) and the anode active material layer, and the anode active material layer may include a conductive material and a binder together with the anode active material.

In some embodiments, the electrolyte solution may include a non-aqueous electrolyte solution. The non-aqueous electrolyte solution may include a lithium salt as an electrolyte and an organic solvent. The lithium salt may be represented by, e.g., Li⁺X⁻. An anion (X-) of the lithium salt may F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, etc.

In some embodiments, the preparation of the powder may include separating a waste battery into a cell unit. For example, a case and an electric wiring of the waste battery may be separated so that the waste battery may be separated to a module unit, and the module unit may be further separated into the cell unit.

In some embodiments, the preparation of the powder may include separating the cathode from a cell, and may include separating the cathode active material layer from the cathode.

In example embodiments, the preparation of the powder may include a dry pulverization of the lithium secondary battery. Accordingly, the form of the powder may be prepared.

In some embodiments, the dry-pulverized lithium secondary battery may be the cell unit, a cathode unit or a cathode active material layer unit as described above.

In example embodiments, the powder may include components derived from at least one of the cathode active material, the anode active material, the cathode current collector, the anode current collector, the electrolyte solution, the conductive material and the binder.

In some embodiments, the powder may be heat-treated before being introduced into a reductive reactor as will be described later. Impurities such as the conductive material and the binder may be removed or reduced by the heat treatment so that a lithium-valuable metal oxide of the powder may be introduced into the reductive reactor with high purity. A temperature of the heat treatment may be in a range from, e.g., about 100 to 500°C, preferably from about 350 to 450°C. Within the above range, the impurities may be substantially removed, so that decomposition and damages of the lithium-valuable metal oxide may be prevented.

In some embodiments, an average particle diameter (an average particle diameter in a volume accumulation distribution) (D50) of the powder may be in a range from 5 to 100 µm. Within the above range, a reductive reaction through a fluidized bed reactor as described later may be easily performed.

In example embodiments, the powder may be reduced to prepare a preliminary precursor mixture including a preliminary lithium precursor and valuable metal-containing particles (e.g., in a step of S20).

The valuable metal-containing particles may include Ni, Co, Al, NiO, CoO, MnO, Al₂O₃, etc.

In some embodiments, the preliminary lithium precursor may include lithium hydroxide (LiOH) or lithium oxide (Li₂O), and may include lithium fluoride (LiF) or lithium carbonate (Li₂CO₃) derived from the anode active material, the electrolyte solution, the conductive material or the binder.

In example embodiments, the powder may be introduced into the reductive reactor, and may be reduced using a hydrogen gas.

During the reduction treatment, the hydrogen gas may be injected into a lower portion of the reductive reactor. The hydrogen gas may contact with the powder while being supplied from the lower portion of the reductive reactor. Thus, the injected powder may be converted into the preliminary precursor mixture by reacting with the reducing reactive gas while moving to an upper portion of the reactor or reside in a reactor body.

In some embodiments, the hydrogen gas may be injected or a carrier gas may be injected together to form a fluidized bed in the reductive reactor. Accordingly, the reductive reactor may serve as a fluidized bed reactor. The carrier gas may include, e.g., an inert gas such as nitrogen (N₂), argon (Ar), etc.

As the powder may repeatedly rise, reside and fall when being treated in the fluidized bed, a reaction contact time may be increased and dispersion of particles may be improved. Thus, the preliminary precursor mixture having a uniform size may be obtained.

However, the concepts of the present invention are not necessarily limited to the fluidized bed reaction. For example, a fixed reaction where a cathode active material mixture may be pre-loaded into a batch reactor or a tubular reactor, and then the reducing reactive gas may be supplied may be performed.

In example embodiments, a temperature of the reduction treatment may be adjusted in a range from about 400 to 800°C, preferably from about 400 to 600°C, more preferably from about 400 to 500°C. Further, the reduction treatment may be finely controlled through process conditions such as a hydrogen concentration, a reaction temperature, a reduction reaction time, etc.

In example embodiments, the prepared preliminary precursor mixture may be primary-washed with water (H₂O) to generate an aqueous lithium precursor solution and a precipitate (e.g., in a step of S30).

In some embodiments, an inert gas may be injected during the primary washing to form a fluidized bed in a washing treatment apparatus. That is, the primary washing may be performed by a fluidized hydration apparatus. A type of the inert gas is not be limited, and may include, e.g., nitrogen (N₂) or argon (Ar).

During the washing treatment in the fluidized hydration apparatus, a contact area and a contact time may be increased as the preliminary lithium precursor mixture may repeatedly rise and fall in the aqueous solution. Accordingly, a reaction between the water and the preliminary lithium precursor as described later may be performed more easily.

The preliminary precursor mixture may be uniformly dispersed without being aggregated by mixing the inert gas. Accordingly, the preliminary lithium precursor may be prevented from being aggregated and precipitated with the valuable metal-containing particles, thereby increasing a recovery ratio of a lithium precursor.

Lithium hydroxide may be advantageous as the lithium precursor from aspects of charging/discharging properties, life-span properties, high-temperature stability, etc., of the lithium secondary battery. For example, lithium carbonate may cause a deposition reaction on the separation layer, thereby degrading life-span stability.

Additionally, lithium hydroxide may be advantageous as the lithium precursor from aspects of lithium precursor regeneration and process efficiency. For example, a solubility of lithium hydroxide in water may be greater than that of lithium carbonate or lithium fluoride, and thus an amount of water required for the washing treatment may become small. Accordingly, device size and process time may be reduced.

In some embodiments, lithium fluoride and lithium carbonate contained in the preliminary lithium precursor may be dissolved in water and converted into lithium hydroxide by the primary washing. Therefore, a high-purity lithium precursor converted to the form of lithium hydroxide form may be obtained.

In an embodiment of the present invention, a calcium compound may be added in the primary washing.

In example embodiments, the calcium compound may include calcium oxide or calcium hydroxide. The primary washing may include at least partially removing components derived from the anode active material, the electrolyte solution, the conductive material or the binder by a reaction with the calcium compound.

In some embodiments, the components derived from the anode active material, the electrolyte solution, the conductive material or the binder may include a fluorine component or a carbon component. When the fluorine component and the carbon component reacts with lithium, lithium fluoride (LiF) and lithium carbonate (Li₂CO₃) are formed. Accordingly, the recovery ratio of lithium precursor may be decreased. The calcium compound added in the primary washing may react with the fluorine component and the carbon component contained in the preliminary precursor mixture to form calcium fluoride (CaF₂) and calcium carbonate (CaCO₃), and may be precipitated.

In example embodiments, the calcium compound added in the primary washing may be precipitated. A dissolution rate of the lithium precursor in water is greater than that of the calcium compound. Thus, when the calcium compound is added in the primary washing, a pH of the lithium precursor aqueous solution may be increased as the lithium precursor dissolves more quickly in water. Therefore, the calcium compound that is not dissolved in the lithium precursor aqueous solution or the precipitated calcium compounds after being dissolved may be sedimented.

As the calcium compound is precipitated, a precipitation reaction with the carbon component and the fluorine component of the calcium compound added in the primary washing may not easily occur. Further, the precipitation reaction with the carbon and fluorine components of the calcium compound may substantially occur in an additional washing as described later. A phase where the calcium compound mainly reacts with the components derived from the anode active material, the electrolyte solution, the conductive material or the binder may be the additional washing step as described later. In consideration of the above aspects, the calcium compound may be selectively added to the primary washing step or the additional washing as described later.

In example embodiments, the valuable metal-containing particles included in the preliminary precursor mixture may not be dissolved in or react with water in the primary washing, and may be precipitated.

In example embodiments, the valuable metal-containing particles may react with the calcium compound added in the primary washing to be precipitated, and may be removed by a solid-liquid separation, which will be described later.

In example embodiments, the valuable metal that reacts with the calcium compound to be precipitated may include aluminum. For example, an aluminum compound contained in the valuable metal-containing particles may be precipitated after reacting with the calcium compound, and may be removed by the solid-liquid separation, as described later. When the calcium compound is added in the primary washing, the aluminum compound may be more easily precipitated as the pH increases. The precipitation of the aluminum compound may substantially occur in the primary washing.

In some embodiments, as the amount of the added calcium compound increases, an amount of the aluminum compounds precipitated and removed may increase.

In example embodiments, the preliminary lithium precursor that is not dissolved in water may be precipitated during the primary washing. For example, the preliminary lithium precursor may be aggregated with the valuable metal-containing particles, and precipitated. Additionally, a lithium compound having a low solubility in water of the preliminary lithium precursor may be precipitated in a solid phase.

In example embodiments, the precipitate may include at least one of an unrecovered lithium compound, a valuable metal compound and a calcium compound.

In example embodiments, the calcium compound may be added in the primary washing in an amount of 2 to 10 wt% based on a total weight of the powder. When adding 2 wt% of the calcium compound based on the total weight of the powder, 70% or more of the components derived from the binder and the conductive material may be removed. When adding 5 wt% or more of the calcium compound based on the total weight of the powder, 90% or more of the fluorine component and the carbon component may be removed.

In example embodiments, the primary washing may be performed using 200 to 400 wt% of water based on the total weight of the powder. If 200 wt% or more of water is added, the preliminary precursor mixture and the calcium compound may be uniformly mixed so that a selectivity of lithium hydroxide may be improved. The added amount of water is not limited to the above range, and may be adjusted according to a viscosity of the preliminary precursor mixture and a standard of the reactor.

In example embodiments, the primary washing may be performed at a temperature in a range from 20 to 70 °C for 4 to 6 hours. When performing at a temperature of 70°C for 4 hours or more, 90% or more of the binder and conductive material-derived components may be removed, and a hydration temperature and time may be adjusted depending on an operating situation.

In example embodiments, the lithium precursor aqueous solution may be solid-liquid separated from the precipitate to recover the lithium precursor (e.g., in a step S40).

The calcium compounds or the valuable metal compounds precipitated in the solid phase may be separated by the solid-liquid separation, and the high-purity lithium precursor may be obtained.

In example embodiments, the solid-liquid separation may be performed using a centrifuge.

In example embodiments, the lithium precursor aqueous solution may include lithium hydroxide, lithium carbonate and lithium fluoride, and may be substantially separated into a lithium hydroxide aqueous solution to obtain the high-purity lithium precursor in the form of lithium hydroxide.

In example embodiments, the lithium precursor may be recovered by additional washing and solid-liquid separation of the precipitate obtained through the solid-liquid separation (e.g., in a step of S50).

A first precipitate generated through the primary washing and solid-liquid separation (e.g., in the steps of S30 and S40) may be additionally washed with water (e.g., in the step of S50) to produce a second lithium precursor aqueous solution and a second precipitate.

The preliminary lithium precursor contained in the first precipitate may be dissolved in the additional washing and may be recovered as the second lithium precursor aqueous solution.

For example, the preliminary lithium precursor aggregated and precipitated with the valuable metal-containing particles during the primary washing (e.g., the step of S30) may be dissolved in the additional washing (e.g., the step of S50). Lithium fluoride and lithium carbonate contained in the preliminary lithium precursor may be converted to lithium hydroxide in the additional washing or removed by the washing. Thus, the high-purity lithium precursor converted into lithium hydroxide form may be produced.

In example embodiments, when the calcium compound is added in the primary washing (e.g., the step of S30), the calcium compound that may not be dissolved in the primary washing to be included in the first precipitate may be dissolved substantially by the additional washing (e.g., the step of S50) and may be reacted with components derived from the anode active material, the electrolyte solution, the conductive material or the binder to be at least partially removed.

In some embodiments, the components derived from the anode active material, the electrolyte solution, the conductive material or the binder may include a fluorine component and a carbon component. The calcium compound dissolved in the additional washing may react with the fluorine component and the carbon component to form calcium fluoride (CaF₂) and calcium carbonate (CaCO₃) and may be precipitated.

In example embodiments, during the additional washing, the calcium compound that may be added in the primary washing and may not be dissolved in water may be precipitated. The valuable metal-containing particles included in the preliminary precursor mixture may be precipitated without being dissolved or reacted in water by the additional washing. During the additional washing, the preliminary lithium precursor that is not dissolved in water may be precipitated.

In example embodiments, the second lithium precursor aqueous solution and the second precipitate may be separated by the additional solid-liquid separation. The second precipitate may include unrecovered lithium compound, the calcium compound the and valuable metal compounds.

In example embodiments, the calcium compound may be added in the primary washing or the additional washing.

For example, the calcium compound may not be added in the primary washing, but may be added in the additional washing. As described above, if the calcium compound is added in the primary washing, the lithium precursor may be dissolved, and the calcium compound may not react with the fluorine and carbon components and may be precipitated. Thus, the effect of the present invention may be implemented even if though the calcium compound is not added in the primary washing and added in the additional washing. In this case, the above-mentioned valuable metal removal effect may occur in the additional washing.

In some embodiments, the additional washing and the solid-liquid separation (e.g., step S50) may be repeated in a plurality of cycles.

Substantially all lithium in the powder may be recovered by the additional washing and the solid-liquid separation.

If the calcium compound is added in the primary washing, the calcium compound that may not be dissolved in the primary washing and may be precipitated among the added calcium compound may be dissolved in the additional washing. In the additional washing, the calcium compound may react with impurities to remove the fluorine and carbon components, and substantially all lithium in the powder may be recovered in the form of lithium hydroxide.

In example embodiments, the additional washing may be performed with 200 to 400 wt% of water based on the total weight of the powder. The additional washing may be performed for 0.5 to 2 hours at a temperature of 20 to 70°C.

The added amount of water, and the temperature and time of the treatment are not limited to the above-mentioned range, and may be adjusted depending on the number of cycles of the additional washing, a viscosity of the preliminary precursor mixture, operating conditions, etc. For example, when the additional washing is performed only once after the primary washing, 8000 wt% of water based on the total weight of the powder may be added to achieve a desired recovery ratio, and may be performed at a temperature of 70 °C for 20 hours..

According to embodiments of the present invention, a method for recovering lithium hydroxide as the lithium precursor with a high selectivity may be provided.

In example embodiments, impurities derived from the binder and the conductive material may be removed by performing the heat treatment before the reduction treatment. Thus, contents of lithium carbonate and lithium fluoride among the lithium compounds contained in the lithium precursor aqueous solution may be reduced.

In example embodiments, the reduction process may utilize the hydrogen gas and a carbon-containing gas may be excluded. Accordingly, when washing the preliminary precursor mixture obtained through the reduction treatment, a content of lithium hydroxide in the lithium precursor aqueous solution may be increased, and by-products of other types of the lithium precursor such as lithium carbonate may be prevented.

The by-products of other types of the lithium precursor such as lithium carbonate and lithium fluoride may be prevented, so that an added amount of the calcium compound may be reduced.

In example embodiments, the lithium precursor may be collected through a dry reductive reaction that may exclude the use of a solution. Therefore, an amount of by-products may be lowered, yield may be increased, and wastewater treatment may not be required, so that an eco- friendly process may be implemented.

Hereinafter, specific experimental examples for enhancing the understanding of the present invention are presented, but this is merely illustrative of the present invention and does not limit the accompanying claims. It is obvious to those skilled in the art that various modifications and modifications to the embodiments are possible within the scope of the scope and technical idea of the present invention. Such alterations and modifications are duly included in the appended claims.

### Examples

### Example 1

A cell separated from a waste lithium secondary battery was discharged, and then cut into several cm-sized pieces and pulverized by a milling. The pulverized cell was heat-treated at 450°C for 1 hour to collect 200 g of powder containing a Li-Ni-Co-Mn oxide.

The collected powder was loaded into a fluidized bed reactor, and a mixed gas of 20 vol% hydrogen/80 vol% nitrogen was injected from a bottom of the reactor at a flow rate of 5.5 L/min for 4 hours to proceed with a reductive reaction. A temperature in the fluidized bed reactor was maintained at 460°C. After performing the reductive reaction, a temperature of the reactor was lowered to 25°C to obtain a preliminary precursor mixture.

300 wt% of water based on a total weight of the powder, 10 wt% of calcium oxide (CaO) based on the total weight of the powder and the obtained preliminary precursor mixture were introduced into a fluidizing hydration device. A flow was formed by injecting 100 vol% nitrogen gas at 30°C at a flow rate of 12 L/min for 5 hours, and a solid-liquid separation was performed through a centrifuge to obtain a first lithium precursor aqueous solution and a first precipitate (a first washing and solid-liquid separation).

The first precipitate was put in a hydration device together with 300 wt% of water based on the total weight of the powder, stirred at 45°C for 1 hour, and a solid-liquid separation was performed through a centrifuge to obtain a second lithium precursor aqueous solution and a second precipitate (a second washing with water and solid-liquid separation).

The second precipitate was put in a hydration device together with 200 wt% of water based on the total weight of the powder, stirred at 45°C for 1 hour, and a solid-liquid separation was performed through a centrifuge to obtain a third lithium precursor aqueous solution and a third precipitate (a third washing and solid-liquid separation).

The third precipitate was put in a hydration device with 200 wt% of water based on the total weight of the powder, stirred at 45°C for 1 hour, and a solid-liquid separation was performed through a centrifuge to obtain a fourth lithium precursor aqueous solution and a fourth precipitate. (a fourth washing and solid-liquid separation).

Concentrations of lithium hydroxide, lithium carbonate and lithium fluoride remaining in each of the first to fourth lithium precursor aqueous solutions were measured, and a weight ratio (recovery ratio) of each lithium compound contained in each of the first to fourth lithium precursor aqueous solutions was measured with respect to the total weight of the lithium compound recovered in the aqueous solution. The measured results are shown in Table 1 below.

**[Table 1]**

| | washing order | | | |
|---|---|---|---|---|
| | 1 | 2 | 3∼4 | total |
| lithium hydroxide [wt%] | 75.7 | 17.4 | 4.7 | 97.8 |
| lithium carbonate [wt%] | 1.6 | 0.1 | 0.0 | 1.7 |
| lithium fluoride [wt%] | 0.2 | 0.2 | 0.0 | 0.4 |

### Example 2

A cell separated from a waste lithium secondary battery was discharged, and then cut into several cm-sized pieces and pulverized by a milling. The pulverized cell was heat-treated at 450°C for 1 hour to collect 200 g of powder containing a Li-Ni-Co-Mn oxide.

The collected powder was loaded into a fluidized bed reactor, and a mixed gas of 20 vol% hydrogen/80 vol% nitrogen was injected from a bottom of the reactor at a flow rate of 5.5 L/min for 4 hours to proceed with a reductive reaction. A temperature in the fluidized bed reactor was maintained at 460°C. After performing the reductive reaction, a temperature of the reactor was lowered to 25°C to obtain a preliminary precursor mixture.

300 wt% of water based on a total weight of the powder, 1.75 wt% of calcium oxide (CaO) based on the total weight of the powder and the obtained preliminary precursor mixture were introduced into a fluidizing hydration device. A flow was formed by injecting 100 vol% nitrogen gas at 30°C at a flow rate of 12 L/min for 5 hours, and a solid-liquid separation was performed through a centrifuge to obtain a first lithium precursor aqueous solution and a first precipitate (a first washing and solid-liquid separation).

The first precipitate was put in a hydration device together with 8000 wt% of water based on the total weight of the powder, stirred at 70°C for 20 hours, and a solid-liquid separation was performed through a centrifuge to obtain a second lithium precursor aqueous solution and a second precipitate (a second washing with water and solid-liquid separation).

Concentrations of lithium hydroxide, lithium carbonate, lithium fluoride and aluminum remaining in the final lithium precursor aqueous solutions including the first and second lithium precursor aqueous solutions obtained by the solid-liquid separation were measured, and weight ratios of each lithium compound and aluminum with respect to the total weight of the lithium compound recovered in the aqueous solution. The measured results are shown in Table 3 below.

### Example 3

The same process as that in Example 2 was performed except that 3.5 wt% of calcium oxide (CaO) was added based on the total weight of the powder. The measured results are also shown in Table 3 below.

### Example 4

The same process as that in Example 2 was performed except that 5.25 wt% of calcium oxide (CaO) was added based on the total weight of the powder. The measured results are also shown in Table 3 below.

### Example 5

The same process as in Example 2 was performed except that 7% by weight of calcium oxide (CaO) was added based on the total weight of the powder. The measurement results are also shown in Table 3 below.

### Comparative Example

### Comparative Example 1

The same process as in that Example 1 was performed except that calcium oxide was not included. The measured results are shown in Table 2 below.

**[Table 2]**

| | washing order | | | |
|---|---|---|---|---|
| | 1 | 2 | 3∼4 | total |
| lithium hydroxide [wt%] | 79.7 | 9.1 | 3.5 | 92.3 |
| lithium carbonate [wt%] | 1.8 | 1.6 | 0.3 | 3.7 |
| lithium fluoride [wt%] | 0.4 | 1.0 | 2.5 | 3.9 |

### Comparative Example 2

The same process as in that Example 2 was performed except that calcium oxide was not included. The measured results are also shown in Table 3 below.

**[Table 3]**

| | Example 2 | Example 3 | Example 4 | Example 5 | Comparative Example 2 |
|---|---|---|---|---|---|
| lithium hydroxide [wt%] | 86.2 | 96.1 | 97.5 | 98.0 | 73.8 |
| lithium carbonate [wt%] | 0.9 | 0.4 | 0.1 | 0.1 | 1.8 |
| lithium fluoride [wt%] | 12.9 | 3.5 | 2.4 | 0.9 | 24.4 |
| aluminum [wt%] | 54 | 51 | 20 | 16 | 53 |

Referring to Tables 1 and 2, when the calcium compound was included within the range according to the above-described embodiments of the present invention, it was confirmed that a ratio of lithium hydroxide in the lithium compound recovered in the aqueous solution increased and ratios of lithium carbonate and lithium fluoride decreased. When the washing treatment was performed only once, the ratio of lithium hydroxide in Comparative Example 1 was higher than that of Example 1. However, when the washing treatment was performed two or more times, it was confirmed that the ratio of lithium hydroxide in Example 1 was higher than that of Comparative Example 1.

Referring to Table 3, when the calcium compound was included within the range of the above-described embodiments of the present invention, it was confirmed that the ratio of lithium hydroxide in the lithium compound recovered in the aqueous solution increased and the ratios of lithium carbonate and lithium fluoride decreased. It was confirmed that the amount of aluminum contained in the aqueous solution decreased as the input amount of the calcium compound increased.

## Claims

1. A method for recovering a lithium precursor, comprising:
preparing a powder including lithium and valuable metals from a lithium secondary battery;
reduction-treating the powder to form a preliminary precursor mixture including a preliminary lithium precursor and valuable metal-containing particles;
performing a primary washing of the preliminary precursor mixture with water (H₂O) to generate a lithium precursor aqueous solution and a precipitate;
recovering a lithium precursor by a solid-liquid separation of the lithium precursor aqueous solution from the precipitate; and
performing an additional washing and solid-liquid separation of the precipitate obtained from the solid-liquid separation to recover a lithium precursor,
wherein a calcium compound is added in the primary washing or the additional washing.

2. The method of claim 1, wherein the reduction-treating is performed through a fluidized bed reactor utilizing a hydrogen gas.

3. The method of claim 1, wherein the preliminary lithium precursor includes lithium hydroxide, lithium fluoride and lithium carbonate.

4. The method of claim 3, wherein lithium fluoride and lithium carbonate contained in the preliminary lithium precursor are dissolved in water and converted into lithium hydroxide in the primary washing.

5. The method of claim 1, wherein the precipitate includes at least one of an unrecovered lithium compound, a valuable metal compound and the calcium compound.

6. The method of claim 1, wherein the primary washing is performed through a fluidization hydration device.

7. The method of claim 1, wherein the primary washing is performed at a temperature of 20 to 70° C for 4 to 6 hours.

8. The method of claim 1, wherein the additional washing is performed at a temperature of 20 to 70 °C for 0.5 to 2 hours.

9. The method of claim 1, wherein the powder includes a component derived from at least one of a cathode active material, an anode active material, a cathode current collector, an anode current collector, an electrolyte solution, a conductive material and a binder.

10. The method of claim 9, wherein the primary washing or the additional washing comprises at least partially removing the component derived from the anode active material, the electrolyte solution, the conductive material or the binder by a reaction with the calcium compound..

11. The method of claim 10, wherein the component derived from the anode active material, the electrolyte solution, the conductive material or the binder includes a fluorine component and a carbon component.

12. The method of claim 1, wherein the primary washing or the additional washing comprises at least partially removing the valuable metal-containing particles by a reaction with the calcium compound.

13. The method of claim 12, wherein the valuable metals include aluminum.

14. The method of claim 1, wherein the calcium compound includes calcium oxide or calcium hydroxide.

15. The method of claim 1, wherein the calcium compound is added in an amount of 2 to 10 wt% based on a total weight of the powder.

16. The method of claim 1, wherein the primary washing or the additional washing is performed using 200 to 400 wt% of water based on a total weight of the powder.

17. The method of claim 1, wherein preparing the powder comprises a dry-pulverization of the lithium secondary battery.

18. The method of claim 17, comprising heat-treating the powder prior to the reduction treatment.
